# EUROPEAN PATENT APPLICATION

(11) **EP 2 395 753 A2**
(43) Date of publication of application: **14.12.2011**
(21) Application number: 11169033.5
(22) Date of filing: 08.06.2011
(51) Int. Cl.: H04N 7/173, H04L 29/08, H04N 21/442, H04N 21/475, H04N 21/258, H04N 21/658

(54) **Video apparatus, and distributed process system**

(30) Priority: 10.06.2010 JP 2010132689
(71) Applicant: Funai Electric Co., Ltd., Daito-shi Osaka 574-0013 (JP)
(72) Inventor: Kimotsuki, Kenji, Daito-shi, Osaka 574-0013 (JP)
(74) Representative: Grünecker, Kinkeldey, Stockmair & Schwanhäusser

(57) **Abstract**

A video apparatus according to the present invention includes: an information process portion that records or plays play information which includes video or audio, a communication portion that connects to a communication network to perform communication, and a control portion that executes a control program. Besides, the video apparatus allows a change of the control program in a case where a predetermined condition is met. Besides, the video apparatus includes a communication control portion that controls the communication portion to perform communication with a predetermined information process apparatus which is connected to the communication network. Besides, the video apparatus include a calculation portion that receives calculation data necessary to perform a calculation process from the information process apparatus; performs calculation that uses the calculation data; and transmits calculation result data which indicate a result of the calculation to the information process apparatus.

## Description

### BACKGROUND OF THE INVENTION

### Field of the Invention

The present invention relates to a video apparatus that performs recording, playing or display of a video, more particularly, to a video apparatus and a distributed process system that include a network function for connecting to a communication network.

### Description of the Related Art

In recent years, thanks to multi-function and versatility of a digital technology, various video apparatuses such as a DVD (Digital Versatile Disc) recorder, an HDD (Hard Disk Drive) and the like are widespread. These video apparatuses decode image/voice digital data recorded on a DVD and an HDD, thereby output image/voice signals to a television apparatus, a monitor, a speaker or the like.

In recent years, as a function that newly comes to be provided in a video apparatus, there is a so-called network function that connects to a communication network to communicate with other apparatuses. By means of the network function, for example, it is possible to log in the Internet to obtain various information and send a video-recording reservation to a video apparatus from a personal computer and the like that are connected to a communication network.

As one of applications of such a network function, a technology is proposed, which shares surplus resources of apparatuses via a communication network with a plurality of apparatuses and an apparatus temporarily uses surplus resources of the other apparatuses.

Regarding the above description, a patent document 1 discloses a system and a method that allow trading of a process time in a CPU. This system and method prompt a terminal owned by a resource purchaser who desires to purchase a CPU resource to input a file name of a program that is a process target, a payment price charged for a process result, and a reception period for receiving a response to a purchase request.

And, the program as the target process is transmitted; and the input file name, payment price and reception period are linked to the transmitted program as the process target and recorded into a database in which items are predefined. On the other hand, as the requested contents from the resource purchaser, the file name, payment price and reception period are presented to a calculator owned by a resource provider who desires to provide a CPU resource. And, the resource provider answers whether to make a response to the requested contents or not.

Besides, regarding the above description, a patent document 2 discloses a signal process apparatus and a distributed process apparatus that are able to make surplus resources of a plurality of apparatuses connected to a network to interact with each other, thereby allow one process to be efficiently performed in a distributed way.

This apparatus and system include a missing-function determination portion that separates tasks into: internal process tasks that are able to be executed in an internal process block; and external process tasks that are unable to be executed in the internal process block; and determines a missing function that corresponds to the external process tasks. Besides, This apparatus and system include a surplus resource retrieval portion that transmits an inquiry for presence of a surplus resource which has the missing function and retrieves the surplus resource.
[Patent document 1] JP-A-2002-92366
[Patent document 2] JP-A-2007-128503

However, the technologies described in the patent document 1 and the patent document 2 have a problem that it is time-consuming to prepare to provide the surplus resource. Specifically, it is necessary to install a dedicated application into the apparatus; perform setting of various information that includes personal information and the like of a user; and register apparatus information into an information process apparatus such as a server and the like.

Besides, in a case where the surplus resource is mutually provided, there is much access from external apparatuses, so that strengthening the security becomes an important issue. Without taking strong security measures, there is a risk that the resource of the apparatus is used by a hostile third party and a risk that various information, for example, personal information and the like recorded in the apparatus leaks.

### SUMMARY OF THE INVENTION

The present invention has been made to deal with the above problems, and it is an object of the present invention to provide a video apparatus and a distributed process system that are able to provide, with a simple operation, a surplus resource of an apparatus via a communication network and have a strong security function.

To achieve the above object, a video apparatus according to the present invention includes: an information process portion that records or plays play information which includes video and audio, a communication portion that connects to a communication network to perform communication, and a control portion that performs execution of a control program: and allows a change of the control program in a case where a predetermined condition is met, the video apparatus comprising:
a communication control portion that controls the communication portion to perform communication with a predetermined information process apparatus which is connected to the communication network; and
a calculation portion that receives calculation data necessary to perform a calculation process from the information process apparatus; performs calculation that uses the calculation data; and controls the communication control portion to transmit calculation result data which indicate a result of the calculation to the information process apparatus.

According to this structure, the video apparatus according to the present invention includes: the information process portion that records or plays play information which includes video or audio, the communication portion that connects to a communication network to perform communication, and the control portion that executes a control program. Besides, the video apparatus allows a change of the control program in a case where a predetermined condition is met. Besides, the video apparatus includes the communication control portion that controls the communication portion to perform communication with the predetermined information process apparatus which is connected to the communication network. Besides, the video apparatus includes the calculation portion that receives calculation data necessary to perform a calculation process from the information process apparatus; performs calculation that uses the calculation data; and transmits calculation result data which indicate a result of the calculation to the information process apparatus.

Besides, to achieve the above object, the video apparatus according to the present invention includes a video signal generation portion that generates a video signal for displaying a reception screen which receives a process reservation for the video apparatus; and the setting portion uses the reception screen to receive a specification of a resource provision time zone that is a time zone in which the calculation portion performs the calculation.

According to this structure, the video apparatus includes the video signal generation portion that generates a video signal for displaying a reception screen which receives a process reservation for the video apparatus. The setting portion uses the reception screen to receive a specification of a resource provision time zone that is a time zone in which the calculation portion performs the calculation.

Besides, to achieve the above object, the video apparatus according to the present invention includes: a change portion that is disposed in a signal path for a control signal transmitted from the control portion and changes a route; and
a second control portion that is connected to the signal path via the change portion;
wherein the calculation portion, in a case where the resource provision time zone arrives, changes a control program executed by the second control portion to a control program for the calculation performed by the second control portion; and controls the change portion to change a route to connect the second control portion to a predetermined apparatus only.

According to this structure, the video apparatus includes: the change portion that is disposed in a signal path for a control signal transmitted from the control portion and changes a route; and the second control portion that is connected to the signal path via the change portion. The calculation portion, in a case where the resource provision time zone arrives, changes the control program executed by the second control portion to the control program for the calculation performed by the second control portion. And, the calculation portion performs a route change to connect the second control portion to the predetermined apparatus only.

Besides, to achieve the above object, the calculation portion of the video apparatus according to the present invention, in a case where the resource provision time zone ends, changes the route prepared by the change portion to the route before the change is performed; resets the control program executed by the second control portion to the control program before the change is performed; and determines whether the control program before the change is performed and the control program after the reset is performed match with each other or not.

According to this structure, the calculation portion, in the case where the resource provision time zone ends, changes the route prepared by the change portion to the route before the change is performed. Besides, the calculation portion resets the control program executed by the second control portion to the control program before the change is performed. And, the calculation portion determines whether the control program before the change is performed and the control program after the reset is performed match with each other or not.

Besides, to achieve the above object, a distributed process system according to the present invention includes: a communication network; an information process apparatus connected to the communication network; and the video apparatus described above.

According to this structure, the distributed process system uses: the communication network; the information process apparatus connected to the communication network; and the video apparatus described above to perform transmission/reception of a calculation program and calculation by means of a surplus resource.

Besides, to achieve the above object, the information process apparatus of the distributed process system according to the present invention generates fee information which indicates a fee charged for the calculation performed by the video apparatus and transmits the fee information to the video apparatus via the communication network.

According to this structure, the information process apparatus generates the fee information which indicates a fee charged for the calculation performed by the video apparatus and transmits the fee information to the video apparatus via the communication network.

As described above, according to the present invention, a surplus resource is provided by means of a plurality of video apparatuses that are produced in accordance with the same standard, so that compared with a case where information process apparatuses that have high versatility but are significantly different from others, for example, a PC and the like are provided as surplus resources, it is possible to achieve simplification of an initial setting and improvement in security.

Besides, according to the present invention, in a case where a surplus resource performs calculation, a communication bus for performing a usual video process is changed to a different communication bus to perform calculation, so that the surplus resource limits an accessible apparatus during the calculation time and it is possible to achieve improvement in the security .

### BRIEF DESCRIPTION OF THE DRAWINGS

Fig. 1 is a block diagram showing a structure of a functional portion according to a first embodiment of the present invention.
Fig 2 is a block diagram showing an internal structure of a video apparatus according to the first embodiment of the present invention.
Fig. 3 is a flow chart showing a calculation resource provision process according to the first embodiment of the present invention.
Fig. 4 is a screen view showing a provision time designation screen according to the first embodiment of the present invention.

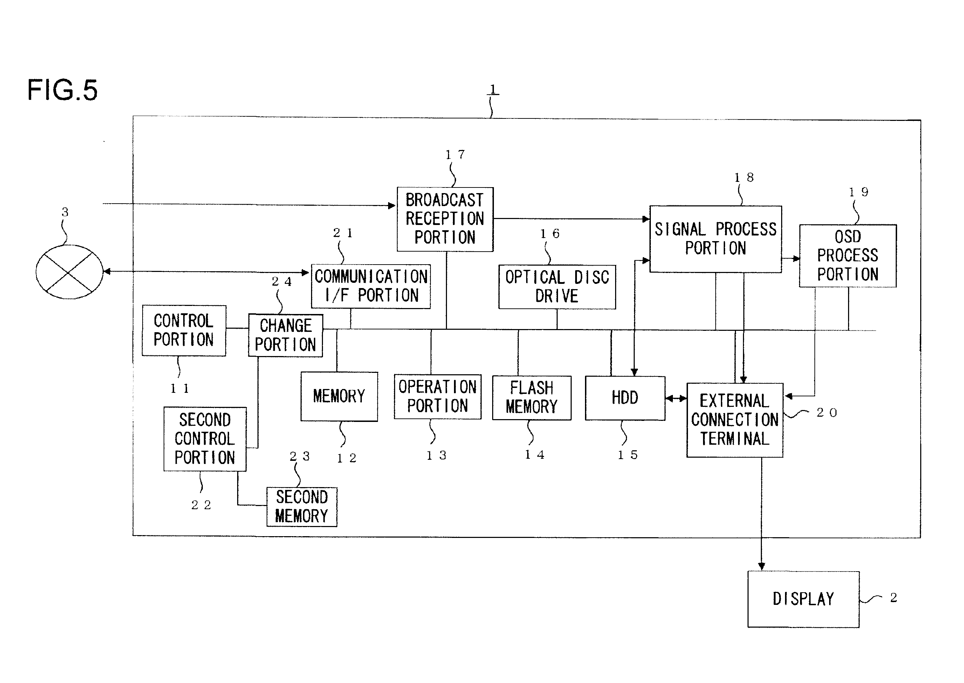

Fig 5 is a block diagram showing an internal structure of a video apparatus according to a second embodiment of the present invention.
Fig. 6 is a flow chart showing a calculation resource provision process according to the second embodiment of the present invention.

### DESCRIPTION OF THE PREFERRED EMBODIMENTS

Hereinafter, embodiments of the present invention are described with reference to the drawings. Here, the embodiments described here are examples, and the present invention is not limited to the embodiments described here. Here, a video apparatus according to the present invention is not intended for a general-purpose information process apparatus such as a PC and the like but for a dedicated apparatus that is produced in accordance with a predetermined standard, that is, a video apparatus in which a function is limited and a change of a control program by a user is not basically allowed.

### <1-1. Internal Structure>

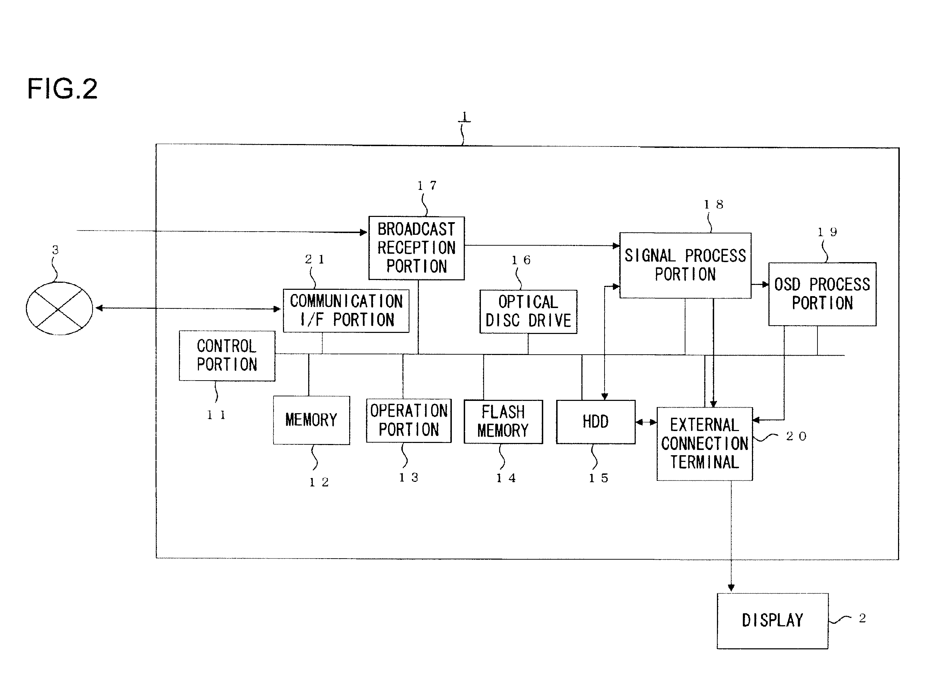

Fig 2 is a block diagram showing an internal structure of an HDD recorder 1 (= video apparatus) according to a first embodiment of the present invention. Here, arrow lines in Fig. 2 represent flows of video/audio data. Besides, straight lines with no arrows represent communication buses with which a control portion 11 transmits and receives a control signal and the like to and from each apparatus.

The HDD recorder 1 is so structured as to include at least: the control portion 11; a memory 12; an operation portion 13; a flash memory 14; an HDD 15; an optical disc drive 16; a broadcast reception portion 17; a signal process portion 18; an OSD (On-Screen Display) process portion 19 (= video signal generation portion); an external connection terminal 20; and a communication I/F portion 21 (= communication portion). Here, as a display apparatus that is connected by the external connection terminal 20, there is a display 2.

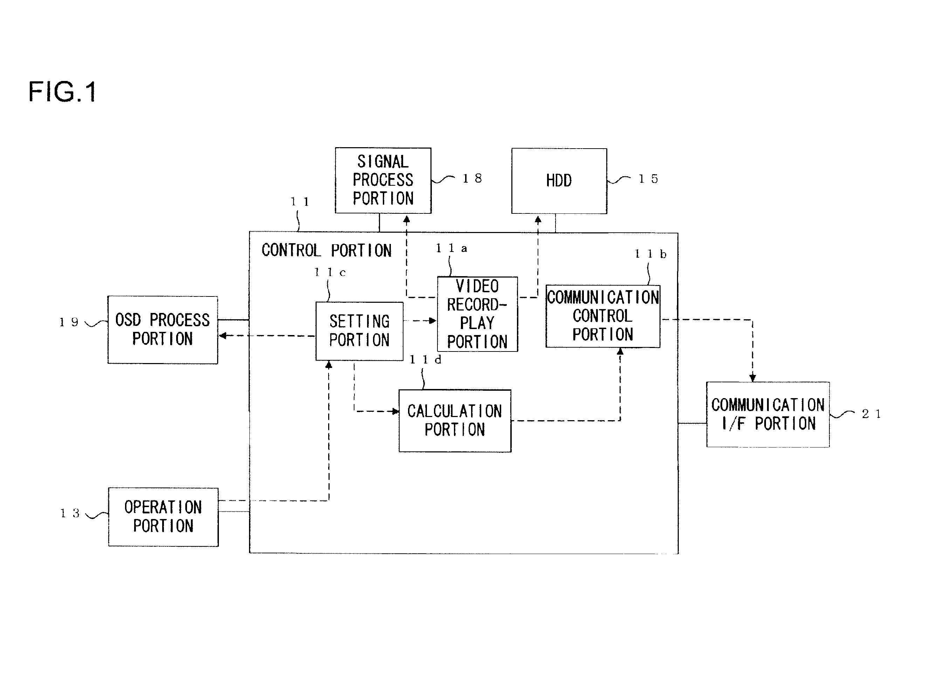

The control portion 11 is intended to control driving of each member of the HDD recorder 1, thereby perform comprehensive control of a play process, a record process, an output process and the like of video/audio. The control portion 11 is composed of, for example, a plurality of microprocessors. Besides, the control portion 11 includes portions of an video record-play portion 11 a to a calculation portion 11d (Fig. 1) later described as functional portions that are achieved by executing a program on a calculation process apparatus of the control portion 11.

The memory 12 is a medium that temporarily records various data held by the HDD recorder 1 and is composed of, for example, a writable RAM (Random Access Memory) and the like. The memory 12 has a role as a buffer memory that temporarily records, for example, process data for various information processes performed by the control portion 11, commands and the like received from a user and the like.

The operation portion 13 is intended for a user to send a command for playing video/audio and the like to the HDD recorder 1. The operation portion 13 includes, for example, a plurality of buttons disposed on a housing of the HDD recorder 1, a remote controller and a remote control signal reception portion that are not shown and the like. The operation portion 13 receives a user's operation by means of these apparatuses. When a user's operation is received, the control portion 11 performs a play process, a record process and the like based on the operation contents.

The flash memory 14 is a kind of EEPROM, that is, a ROM which is writable/erasable by a user of the device. It is possible to perform writing and erasing of data to and from the flash memory 14 with mounted on a circuit board, so that the flash memory 14 is used in an application that needs rewriting during a use time, for example, to save operation setting data of an apparatus and information unique to a user and the like.

The HDD 15 is a magnetic record medium that records digital data. In the present embodiment, the HDD 15 is used to chiefly record: data that are generated from video/audio data contained in a broadcast wave; and temporary data in a case where a surplus resource is provided and a calculation process is performed.

The optical disc drive 16 is an optical apparatus that is intended to optically read various data from an optical disc such as a CD (Compact Disc) media, a DVD (Digital Versatile Disc) media or the like. The optical disc drive 16 performs control of an optical pickup (not shown), thereby directs a light beam to an optical disc to perform reading of various information such as audio information, video information and the like that are recorded in the optical disc. During this time, the optical disc drive 16 performs various control such as drive control, focus control, tilt control or the like of the optical pickup.

The broadcast reception portion 17 is connected to an external antenna (not shown) to perform selection, reception, frequency conversion, amplification, demodulation and the like of a digital/analog broadcast. The broadcast reception portion 17, in an analog system, is so structured as to include: an analog tuner; an image intermediate-frequency amplification circuit; a demodulation circuit; an amplification circuit and the like. Besides, in a digital system, the broadcast reception portion 17 is so structured as to include: a digital tuner; an error correction portion and the like.

For example, in a case where a digital broadcast is received, the digital tuner of the broadcast reception portion 17 performs amplification and detection of an intermediate frequency signal. In this way, a TS (= Transport Stream) that is an MPEG 2-system digital signal is obtained. Here, the TS is a data stream that is obtained by dividing an audio PES (Packetized Elementary Stream), a video PES, and additional information of a plurality of programs into fixed-length TS packets and linking them to each other. The TS is given to the signal process portion 18 to be converted into a video/audio signal. Here, it is also possible to record the TS into the HDD 15 without converting the TS. In this case, the signal process portion 18 performs through-output only of the TS, that is, outputs the TS as it is.

The signal process portion 18 is a multi-separation portion that receives the TS generated by the broadcast reception portion 17 and the digital data that the optical disc drive 16 reads from the optical disc and separates them into an audio digital signal that contains the audio information and a video digital signal that contains the video information. Specifically, for example, the signal process portion 18 divides the TS generated by the broadcast reception portion 17 into TS packets. And, the signal process portion 18 reconnects the TS packets to generate audio/video PESs.

And, the signal process portion 18 connects the PESs to each other to generate an ES (Elementary Stream = coded audio/video data). Further, the signal process portion 18 performs decoding of the ES and converts it into various digital signals. The digital signal obtained by the decoding is given to the HDD 15 to be recorded. Besides, the digital signal is given to the external connection terminal 20 to be output to the display 2 and the like.

The OSD process portion 19 is a functional portion that generates a video signal. The OSD process portion 19 converts information to be output from the HDD recorder 1 into video data that are visible to a user and generates a video signal for displaying the converted video data on the display 2. The generated video signal is output from the external connection terminal 20.

The external connection terminal 20 is an interface that is composed of a plurality of input-output terminals that include, for example: an HDMI (High Definition Multimedia Interface) terminal; a USB (Universal Serial Bus) terminal and the like. The external connection terminal 20 uses these input-output terminals to connect the HDD recorder 1 to an external apparatus, for example, the display 2, thereby perform input-output of the digital signal and the analog signal.

The communication I/F portion 21 is a physical interface that is intended to connect the HDD recorder 1 to a communication network. The communication I/F portion 21 is so structured as to include, for example: a LAN cable connector for connecting to a cable LAN that is in conformity with the IEEE 802.3 standard; and a wireless antennal for connecting to a wireless LAN that is in conformity with the IEEE 802.11 standard and the like. Here, the communication I/F portion 21 may be so structured as to include: an analog connection terminal for connecting to a telephone communication network; and an ISDN connection terminal for connecting to an ISDN communication network.

The display 2 is a display apparatus that includes: a display portion; an operation portion; a control portion; and a connection portion that are not shown. For example, the display 2 receives the digital signals that include the video/audio via an HDMI cable connected to the HDMI terminal of the connection portion. And, the display portion 2 performs combining of the digital signals and performs output of the video/audio.

### <1-2. Functional-Portion Structure>

Here, a relationship among the functional portions that the HDD recorder 1 according to the first embodiment of the present invention uses to perform a calculation resource provision process is described using a block diagram in Fig. 1. Here, broken arrow lines in Fig. 1 represent flows of control signals.

As shown in Fig. 1, the calculation resource provision process according to the present invention is performed by the video record-play portion 11a (= information process portion); the communication control portion 11b; the setting portion 11c; and the calculation portion 11d that the control portion 11 includes.

The video record-play portion 11 a performs comprehensive control of recording of the video data onto the HDD 15 and the play process of the video data recorded on the HDD 15. Specifically, for example, the video record-play portion 11a, based on set contents received by the setting portion 11a described later, performs a reserved video-record process, a reserved play process and the like. In the reserved video-record process, in a case where a video-record reservation time received by the setting portion 11 c arrives, the video record-play portion 11 a performs the recording of a specified broadcast program without requiring a user's operation.

The communication control portion 11b performs communication control for executing mutual communication with an external apparatus connected by the communication I/F portion 21, for example, a not-shown calculation server for research and the like. In this way, the communication control portion 11b receives calculation data that a surplus resource (part of the control portion 11 in the present embodiment) of the HDD recorder 1 uses to perform a predetermined calculation; and transmits a calculation result calculated by the surplus resource. Besides, the communication control portion 11b, in a case where the communication I/F portion 21 includes a wireless antenna, has a role in performing control of wireless communication via a wireless communication network.

The setting portion 11c receives various settings from the user that the video record-play portion 11a uses to perform the video record/play processes. Besides, the setting portion 11c receives various settings from the user that are used by the calculation portion 11d described later which uses the surplus resource to perform calculation. The set contents include, for example: a time zone (hereinafter, called a "resource provision time zone") in which the surplus resource is provided and the calculation is performed; a resource allocation that allows the surplus resource to be used; a record destination in which temporary information generated by the calculation is recorded and the like.

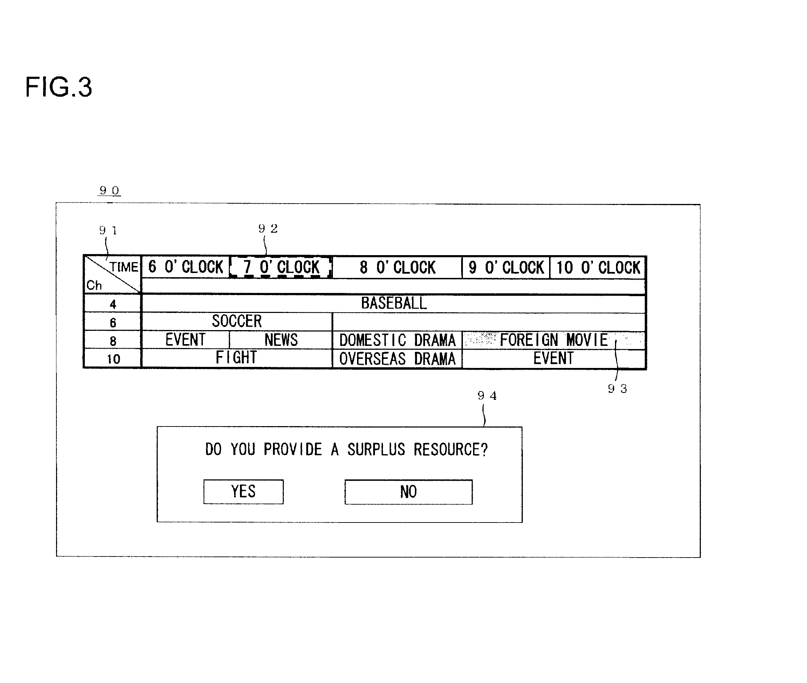

The reception of the resource provision time zone is performed by means of, for example, an EPG screen 90 shown in Fig. 3.

The calculation portion 11d, at a time a predetermined condition is met, receives the calculation data from the calculation server for research via a wide-area communication network. And, the calculation portion 11 d performs the calculation by means of a predetermined surplus resource and transmits the calculation result to the calculation server. Here, as an example of the surplus resource, for example, there used are part of a microprocessor of the control portion 11 or part of a record region of the flash memory 14 or of the HDD 15.

### <1-3. EPG Screen>

Fig. 3 is an example of the EPG screen 90 that the setting portion 11c displays. The setting portion 11c, upon detecting a predetermined user's operation by means of the operation portion 13, generates, by means of the OSD process portion 19, a video signal for displaying the EPG screen 90 and outputs the video signal to the display 2. And, the setting portion 11c waits for a resource provision time zone to be designated by the operation portion 13.

The EPG screen 90 includes at least: an EPG 91; a cursor 92; a video record reservation mark 93; and a message window 94. According to this, the user is able to perform a reservation setting of a resource provision time zone with the same operability of performing a video-record reservation of a broadcast program.

In the example shown in Fig. 3, four channels of 4 ch. to 10 ch. and program information for five hours of 6 o'clock to 10 o'clock are displayed. On the right sides of the respective channel sections, program names of broadcast scheduled programs are displayed. In an initial state, background colors of all the program sections are displayed in a usual color (= white color). In this state, when the user pushes down an operation key, a decision key and the like, a drag operation of the cursor 92 and a decision operation of a program to be reserved for video recording are performed.

If the decision key is pushed down in a state where the cursor 92 lies on a predetermined program name, in the program section, as the video record reservation mark 93, the usual background color changes to a different background color to perform enhanced display. In the example in Fig. 3, a watching reservation is performed for a "foreign movie" that is broadcast from 9 o'clock on the 8 ch.

Besides, if the decision key is pushed down in a state where the cursor 92 lies on a time section of the EPG information, the message window 94 is displayed to inquire whether to set the designated time zone as the resource provision time zone or not. In this state, if the "Yes" in the message window 94 is selected, the designated time zone is set as the resource provision time zone.

Here, if the time zone in which the video record reservation mark 93 is placed is designated, an error message is displayed or a warning message is displayed to notify that the video record reservation time zone and the designated resource provision time zone overlap with each other.

### <1-4. Calculation Resource Provision Process>

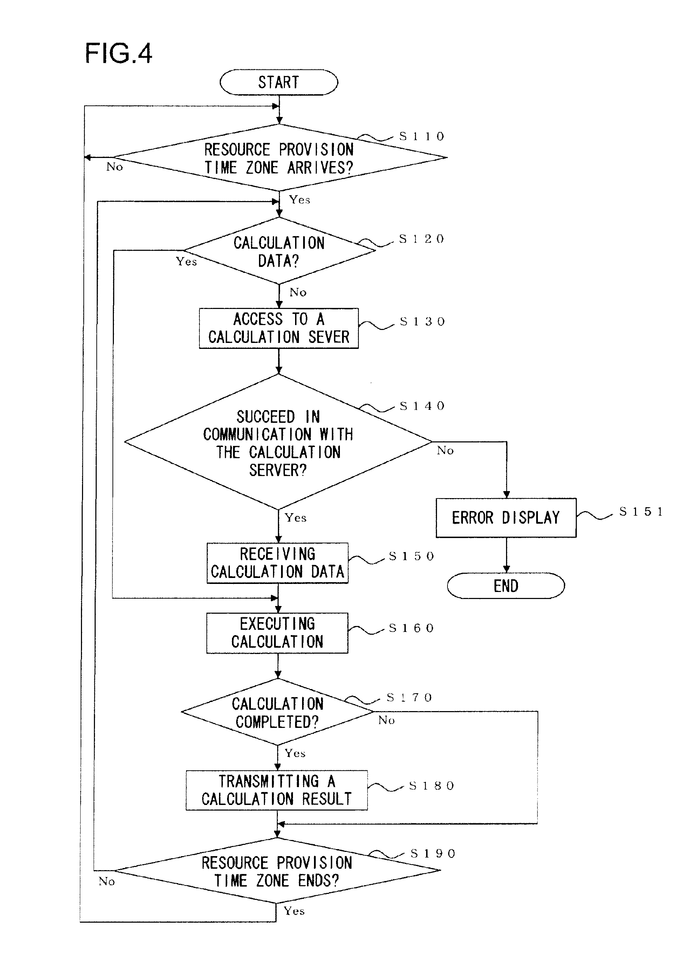

Here, a calculation resource provision process performed by the HDD recorder 1 according to the first embodiment of the present invention is described using a flow chart in Fig. 4. The process shown in Fig. 4 is able to be started at an arbitrary time in a state where the HDD recorder 1 is in an turned-on state.

After the start of the present process, the calculation portion 11d, in a step S110, determines whether the resource provision time zone whose setting is received in advance by the setting portion 11c arrives or not. In a case where the resource provision time zone does not arrive, the calculation portion 11d goes again to the step S110 to continue the monitoring.

In a case where the resource provision time zone arrives, the calculation portion 11d, in a step S120, determines whether the calculation is yet to be executed or whether the calculation data during the calculation are recorded in the HDD 15 or not. For example, in the previous calculation, in a case where the resource provision time zone ends during the calculation, the calculation data during the calculation remain.

In a case where the calculation data are recorded in the HDD 15, the calculation portion 11d goes to a step S160. In a case where the calculation data are not recorded in the HDD 15, the calculation portion 11d, in a step S130, instructs the communication control portion 11b to perform communication with the predetermined server. Here, various set information that the communication control portion 11b uses to perform communication, for example, an IP address and the like of the calculation server are recorded in advance into the flash memory 14 and the like at the production time of the HDD recorder 1.

Next, the calculation portion 11d, in a step S140, determines whether the communication with the calculation server is successfully performed and whether the calculation data are confirmed present in the calculation server or not. In a case where the communication with the calculation server fails or in a case where the calculation data are not present in the calculation server, the calculation portion 11d, in a step S151, generates, by means of the OSD process portion 19, a video signal for displaying an error message and outputs the video signal to the display 2.

In a case where the calculation data are confirmed present in the calculation server, the calculation portion 11d, in a step S 150, performs reception of the calculation data. Here, it is desirable that the amount of the calculation data to be received is decided in accordance with a process capability of the surplus resource.

Next, the calculation portion 11d, in the step S150, controls each processor of the control portion 11 to perform calculation by means of the calculation data that uses the surplus resource. Next, the calculation portion 11d, in a step S 170, determines whether the calculation by means of the calculation data is completed or not.

In a case whether the calculation is not completed, the calculation portion 11d goes to a step S 190 described later. In a case where the calculation is completed, the calculation portion 11d, in a step S 180, instructs the communication control portion 11b to transmit the calculation result data that indicate the calculation result to the calculation server.

Next, the calculation portion 11d, in the step S 190, determines whether the resource provision time zone ends or not. In a case whether the resource provision time zone does not end, the calculation portion 11d goes to the step S120 to continue the calculation process. In a case where the resource provision time zone ends, the calculation portion 11d goes to the step S110.

According to the present embodiment described above, the EPG screen 90 is used to receive the specification of the resource provision time zone; and at the time the resource provision time zone arrives, the calculation by means of the calculation data is performed. Because of this, the user is able to provide the surplus resource having a sense of using an extended function for the video record reservation.

Besides, according to the present embodiment, the user does not need to manually perform various settings for providing the surplus resource, for example, installation of an application, a communication setting for gaining access to a resource server and the like. Because of this, compared with a case where a surplus resource is provided in a general-purpose apparatus such as a PC and the like, it is possible to achieve improvement in the convenience and security.

### [Embodiment 2]

Next, a second embodiment of the present invention is described.

### <2-1. Internal Structure>

The HDD recorder 1 in the present embodiment, besides the structure (Fig. 2) in the first embodiment, includes: a second control portion 22; a second memory 23; and a change portion 24.

The second control portion 22 is a control portion that includes a microprocessor for performing the calculation resource provision process. The second control portion 22 performs supplementary processes for the video record process, the play process and the like that the control portion 11 performs in a usual time. And, in the case where the resource provision time zone arrives, firmware (= control program) is changed to firmware (hereinafter, called "calculation firmware") for performing the calculation process of the calculation data received from the calculation server. If the resource provision time zone ends, the firmware is changed back again to the usual firmware.

The second memory 23 is a buffer memory that is used during a time the second control portion 22 performs calculation by means of the calculation firmware. The second memory 23 is separated from the communication bus with which the control portion 11 performs the communication and is accessible from the second control portion 22 only.

The change portion 24 is a member for electrically connecting/disconnecting the second control portion 22 to and from the communication bus. The change portion 24 includes, for example, a switching circuit and the like that are not shown and performs a change of the communication bus by means of this switching circuit.

The change portion 24, during the usual time, connects the second control portion 22 to the communication bus (hereinafter, called a "main communication bus") that connects the control portion 11 to each apparatus. And, on a stage where the calculation resource provision process is started, the change portion 24 disconnects the second control portion 22 from the main communication bus. According to this, even in a case where for example, a virus program and the like are falsified as the calculation data, it is avoided that illegal control is performed via the main communication bus.

### <2-2. Functional-Portion Structure>

The structure is the same as the first embodiment but part of the functions of the calculation portion 11d are different. The calculation portion 11d in the present embodiment, when performing the calculation using the calculation data in the resource provision time zone, performs rewriting of the firmware of the second control portion 22. Further, the calculation portion 11d controls the change portion 24 to disconnect the second control portion 22 from the main communication bus. According to this, a state is obtained for performing the calculation with the second control portion 22 separated from each apparatus portion.

Besides, the calculation portion 11d in the present embodiment, on a stage where the calculation by the second control portion 22 is completed or on a stage where the resource provision time zone ends, rewrites the firmware of the second control portion 22 back to the firmware before the change and performs checks on the control portion 11 and the firmware contents of the second control portion 22. According to this, even in a case where a virus and the like are contained in the calculation data and the firmware is illegally rewritten, it is possible to find these.

### <2-3. Calculation Resource Provision Process>

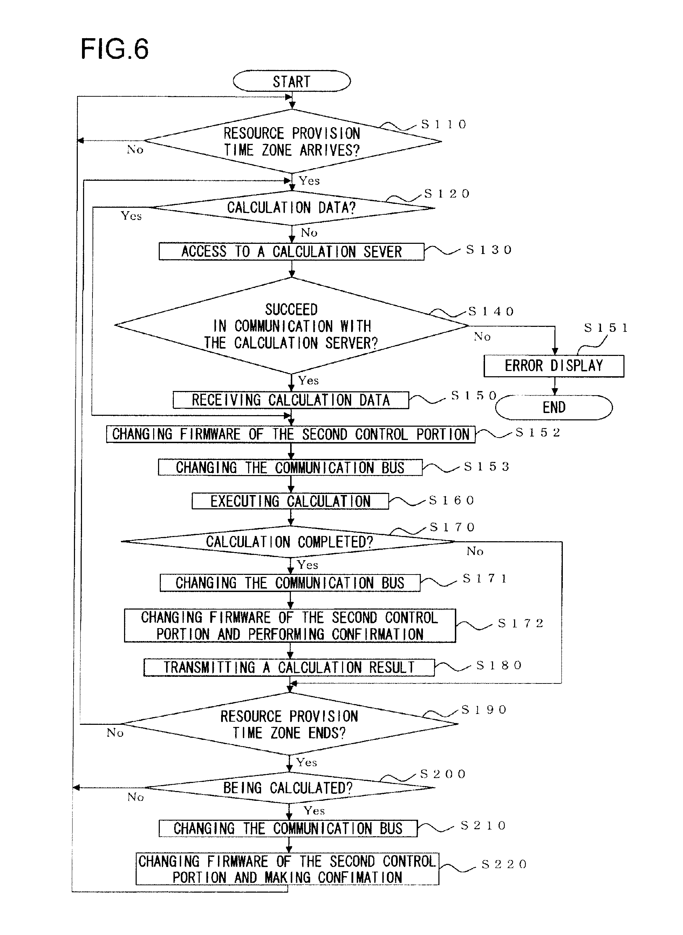

Here, a calculation resource provision process performed by the HDD recorder 1 according to the second embodiment of the present invention is described using a flow chart in Fig. 6. Here, the same-content processes as Fig. 4 in the first embodiment are indicated by the same step numbers and description of them is skipped.

The step S110 to the step S 150 are the same as the first embodiment. After the communication data are received in the step S150, the calculation portion 11d, in a step S152, rewrites the firmware of the second control portion 22 to firmware dedicated to the calculation. Here, the firmware dedicated to the calculation is prepared in advance and recorded in the flash memory 14 and the like. Or, the dedicated firmware may be obtained from the calculation server and the like via the communication I/F portion 21.

Next, the calculation portion 11d, in a step S151, controls the change portion 24 to perform changing of the connection of the main communication bus. According to this, a state is obtained, in which the second control portion 22 is disconnected from the main communication bus. After the changing is completed, the step S160 and the step S 170 are performed.

In a case where it is determined in the step S170 that the calculation is completed, the calculation portion 11d, in a step S171, controls the change portion 24 to perform the changing of the connection of the main communication bus. According to this, a state is obtained, in which the second control portion 22 is connected to the main communication bus.

Next, the calculation portion 11d, in a step S172, rewrites the firmware of the second control portion 22 back to the firmware in the usual time, that is the firmware before the firmware is rewritten to the firmware for the calculation. Further, the calculation portion 11d performs checks on the contents of the rewritten firmware, for example, a version check and the like. In a case where the version of the firmware does not match with the version before the calculation is performed, an error process is performed. Here, the firmware in the usual time is prepared in advance and recorded in the flash memory 14 and the like.

If the step S 172 is completed, the steps S180 and the step S 190 are performed. In a case where it is determined in the step S 190 that the calculation is being performed, the calculation portion 11d, in a step S210 and a step S220, performs a change of the communication bus, rewriting of the firmware, and a check on the firmware. Here, because the process contents of the step S210 and the step S220 are the same as the step S171 and the step S 172, description of them is skipped. If the step S220 is completed, the calculation portion 11d goes to the step S110.

According to the present embodiment described above, in the case where the second control portion 22 as the surplus resource performs the calculation, the connection of the main communication bus is changed into the connection different from the case where the usual video process is performed; thereafter, the calculation is performed. Because of this, during the calculation time, the second control portion limits the accessible resource and it is possible to achieve improvement in the security.

### [Other Embodiments]

The present invention is described above using the preferred embodiments and examples; however, the present invention is not limited to the above embodiments and it is possible to variously modify and put the invention into practice within the scope of the technical concept.

Accordingly, the present invention is also applicable to the following embodiments.

(A) In the above embodiments, as an example of the video apparatus according to the present invention, the HDD recorder 1 is described; however, if an apparatus is a video apparatus that is able to connect to a communication network to perform communication, the present invention may be used in the video apparatus other than the HDD recorder 1. For example, an embodiment may be employed, which uses, for example, a DVD player, a VCR (Video Cassette Recorder), a television apparatus, an STB (Set Top Box) and the like.

(B) In the above embodiments, each functional portion involved in the calculation resource provision process in the present invention is achieved by executing the program on the calculation process apparatus such as the microprocessor and the like; however, an embodiment may be employed, in which each functional portion is achieved by a plurality of circuits.

(C) In the above embodiments, the time zone in which the surplus resource is provided is decided based on the time-zone designation from the user by means of the EPG screen 90; however, an embodiment may be employed, in which the provision time zone is decided by a way other than this. For example, an embodiment may be employed, in which a time zone, where the performance of a video record process and a play process is not detected and a video record reservation is not performed, is decided as the provision time zone. Or, an embodiment may be employed, which includes a human body detection sensor that uses infrared rays and the like to detect a human body and decides a time zone, where a human body is not detected, as the provision time zone.

(D) In the above embodiments, the temporary data generated by the calculation that is performed by the surplus resource are recorded into the flash memory 14 or the HDD 15; however, an embodiment may be employed, in which the temporary data are recorded into a record medium other than these. For example, an embodiment may be employed, in which the temporary data are recorded into, for example, rewritable optical discs such as a DVD-RW and the like that are disposed in the optical disc drive 16.

(E) In the above second embodiment, in the case of the connection to the calculation server, the change is performed by means of the change portion 24; however, an embodiment may be employed, in which after the communication with the calculation server ends, checks are performed on the various information, for example, the firmware, the personal information and the like to determine whether there is a difference from the information before the communication or not. According to this, it is possible to improve the security.

## Claims

1. A video apparatus (1) that includes: an information process portion (11a) that records or plays play information which includes video or audio, a communication portion (21) that connects to a communication network (3) to perform communication, and a control portion (11) that performs execution of a control program: and allows a change of the control program in a case where a predetermined condition is met, **characterized in that**
the video apparatus (1) comprises:
a communication control portion (11b) that controls the communication portion to perform communication with a predetermined information process apparatus which is connected to the communication network (3); and
a calculation portion (11d) that receives calculation data necessary to perform a calculation process from the information process apparatus; performs calculation that uses the calculation data; and controls the communication control portion (11b) to transmit calculation result data which indicate a result of the calculation to the information process apparatus.

2. The video apparatus (1) according to claim 1, **characterized in that**
the video apparatus (1) further comprises:
a video signal generation portion (19) that generates a video signal for displaying a reception screen which receives a process reservation for the video apparatus; and
a setting portion (11c) that uses the reception screen to receive a specification of a resource provision time zone that is a time zone in which the calculation portion performs the calculation.

3. The video apparatus (1) according to claim 2, **characterized in that**
the video apparatus (1) further comprises:
a change portion (24) that is disposed in a signal path for a control signal transmitted from the control portion and changes a route; and
a second control portion (22) that is connected to the signal path via the change portion (24);
wherein the calculation portion (11d), in a case where the resource provision time zone arrives, changes a control program executed by the second control portion (22) to a control program for the calculation performed by the second control portion (22); and controls the change portion (24) to prepare a route that connects the second control portion (22) to a predetermined apparatus only.

4. The video apparatus (1) according to claim 3, wherein the calculation portion (11d), in a case where the resource provision time zone ends, changes the route prepared by the change portion (24) to a route before the change is performed; resets the control program executed by the second control portion (22) to a control program before the change is performed; and determines whether the control program before the change is performed and the control program after the reset is performed match with each other or not.

5. A distributed process system comprising:
a communication network (3);
an information process apparatus connected to the communication network (3); and
the video apparatus (1) according to any of claims 1 to 4.

6. The distributed process system according to claim 5, **characterized in that**
the information process portion generates fee information which indicates a fee charged for calculation performed by the video apparatus (1) and transmits the fee information to the video apparatus (1) via the communication network (3).
